(19) Europäisches Patentamt
European Patent Office
Office européen des brevets

(11) EP 1 321 493 A1

(12) EUROPEAN PATENT APPLICATION

(43) Date of publication:
25.06.2003 Bulletin 2003/26

(51) Int Cl.[7]: C09B 67/00, C08G 69/44

(21) Application number: 01204999.5

(22) Date of filing: 19.12.2001

(84) Designated Contracting States:
AT BE CH CY DE DK ES FI FR GB GR IE IT LI LU MC NL PT SE TR
Designated Extension States:
AL LT LV MK RO SI

(71) Applicant: DSM N.V.
6411 TE Heerlen (NL)

(72) Inventors:
- Tijssen, Pascal M. H. P.
6191 XV Beek (NL)
- Stanssens, Dirk A. W.
3530 Houthalen (BE)
- Muscat, Dirk
6171 TN Stein (NL)

(74) Representative: Mooij, Johannes Jacobus et al
DSM Patents & Trademarks
Office Geleen
P.O. Box 9
6160 MA Geleen (NL)

# (54) Method for enhancing the solubility of a colorant

(57) The invention relates to a method for enhancing the solubility of a colorant. According to this method, a colorant is contacted with a branched polyesteramide. The method results in a dye, which is more soluble than the original colorant or in a dye which is soluble in more solvents than the solvents in which the original colorant could be dissolved or in a dye originating from a colorant which was not soluble at all. The invention also relates to a dye comprising a colorant and a branched polyesteramide, a composition comprising the dye, use of the dye as a fugitive dye and an object marked with the dye.

EP 1 321 493 A1

## Description

The invention relates to a method for enhancing the solubility of a colorant. The invention also relates to a dye, a composition comprising the dye, use of the dye as a fugitive dye and an object marked with the dye.

A colorant is understood to be a dye or a pigment. A dye is understood to be a soluble colorant, whereas a pigment is understood to be a non-soluble colorant. Dyes are known from The Sigma-Aldrich Handbook of Stains, Dyes and Indicators (Floyd J. Green, Aldrich Chemical Company, Inc., Milwaukee, 1991, ISBN Number 0-941633-22-5). This handbook describes for many individual dyes their solubility in a number of solvents. Generally, known dyes are soluble in a limited number of solvents and often also to a limited extent only.

A known method for enhancing the solubility of a colorant is disclosed, for example, in US-A-4,726,844. This patent relates to water-soluble dyes for ink jet printing. In the method according US-A-4,726,844, an amine functional colorant, after having been synthesized, is first reacted with a tri-chlorotriazine derivative and after that reacted with a polyethylene oxide functional amine.

A disadvantage of this known method is that the method is complicated; the reactions with the tri-chlorotriazine derivative and polyethylene oxide functional amine are carried out in water, which introduces the risk of side reactions. Furthermore, the colorant will be statistically distributed over the triazine rings with substitution of 0, 1, or 2 or even 3 chlorine atoms, resulting in a composition of polyethylene oxide bonded coloring moieties with different solubility properties.

It is the object of the present invention to provide a less complicated method for enhancing the solubility of a colorant.

According to the method of the invention, this object is achieved in that a colorant is contacted with a branched polyesteramide. The method according to the invention results in a dye, which is more soluble than the original colorant or in a dye which is soluble in more solvents than the solvents in which the original colorant could be dissolved or in a dye originating from a pigment. A further advantage is that by varying the composition of the branched polyesteramide, the solubility of the dye can be controlled in a desirable manner. The solubility of the dye may be varied from soluble in highly polar solvents, such as water, to soluble in apolar solvents, e.g. toluene. Furthermore, the method can be applied for a wider range of colorants, whereby each single type of branched polyesteramide can be combined with wide range of colorants. A further advantage is that the method can be applied without prior chemical modification of the colorant.

Another method for enhancing the solubility of colorants is published by A. Sunder et al in Communications of Angew. Chem. Int. Ed. 1999, 38, No. 23, page 3552-3555. Sunder et al describe combinations of hydrophilic dyes encapsulated in fatty acid modified polyglycerol polymers. Through these combinations the dyes are soluble in apolar solvents. A disadvantage is that the method is not suited to enhance the water solubility of water insoluble dyes. A further disadvantage is the complicated method for preparing the modified polyglycerol.

In the method according to the invention a colorant is contacted with a branched polyesteramide. Contacting is performed by homogeneously mixing of the colorant with the branched polyester amide in the liquid state. The liquid state can be a solution or a melt. Contacting is performed at temperature that is high enough to keep the branched polyester amide in the liquid state and low enough to prevent decomposition of any of the branched polyester amide and the colorant. An advantage of this method is that preparation of the soluble dye can be carried out under moderate conditions and that prior dissolving of the colorant is not necessary. Preferably, the temperature is between 100°C and 200°C. This allows the use of colorants with very low solubility, if any at all. A further advantage is that in particular cases solvents can be excluded, since the branched polyesteramides have a low viscosity when in the molten state at such an elevated temperature.

In a preferred embodiment of the method of the invention the colorant, while being contacted, is chemically reacted with the branched polyesteramide, thereby forming an ionic bond or a covalent bond between the colorant and the branched polyesteramide. The advantage of this method is that it results in a dye that can advantageously be used as a fugitive dye. A fugitive dye is meant to be a dye, which, after being applied on a substrate, can be removed again from the substrate.

A branched polyesteramide is understood to be a polyesteramide prepared from dicarboxylic acid or cyclic anhydride thereof with alkanolamine, preferably dialkanolamine, optionally in combination with mono and/or trialkanolamine, mono-functional carboxylic acid, mono-functional alcohol and/or mono-functional amine.

Suitable polyesteramide, that can be used for the method of the invention, generally have a weight average molecular weight between 800 and 50.000 g/mol.

Suitable cyclic anhydrides that can be used in the preparation of the branched polyesteramides include phthalic acid anhydride, tetrahydrophthalic acid anhydride, naphthalenic dicarboxylic acid anhydride, hexahydrophthalic acid anhydride, 5-norbornene-2,3-dicarboxylic acid anhydride, norbornene-2,3-dicarboxylic acid anhydride, naphthalenic dicarboxylic acid anhydride, 2-dodecene-1-yl-succinic acid anhydride, maleic acid anhydride, (methyl)succinic acid anhydride, glutaric acid anhydride, 4-methylphthalic acid anhydride, 4-methylhexahydrophthalic acid anhydride,

4-methyltetrahydrophthalic acid anhydride and the maleinised alkylester of an unsaturated fatty acid.

Suitable dicarboxylic acids that can be used in the preparation of the branched polyesteramides are dicarboxylic acids that are, for example, derived from $C_2$-$C_{24}$ (cyclo)alkyl, aryl or (cyclo)alkyl-aryl diradical. These radicals may optionally be substituted. The diradicals may be substituted with for example a ($C_1$-$C_{26}$) alkyl group, which may be saturated or unsaturated; preferably $C_1$ is used as the substituent. The diradical may be for example a (methyl-)1,2-ethylene, (methyl-)1,2-ethylidene, 1,3-propylene, (methyl-)1,2-cyclohexyl, (methyl-)1,2-phenylene, 1,3-phenylene, 1,4-phenylene, 2,3-norbornyl, 2,3-norbornen-5-yl and/or (methyl-)1,2 cyclohex-4-enyl radical. The carboxylic acids may be saturated or unsaturated. Suitable dicarboxylic acids include phthalic acid, tetrahydrophthalic acid, naphthalenic dicarboxylic acid, hexahydrophthalic acid, 5-norbornene-2,3-dicarboxylic acid, norbornene-2,3-dicarboxylic acid, naphthalenic dicarboxylic acid, 2-dodecene-1-yl-succinic acid, maleic acid, (methyl)succinic acid, glutaric acid, 4-methylphthalic acid, 4-methylhexahydrophthalic acid, 4-methyltetrahydrophthalic acid .

Suitable alkanolamines that can be used in the preparation of the branched polyesteramides are alkanediolamines and dialkanolamines. For the alkanolamines preferably dialkanolamines are used. More preferably the dialkanolamine is an alkanolamine according to formula (II):

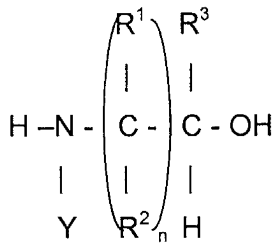

(II)

in which:

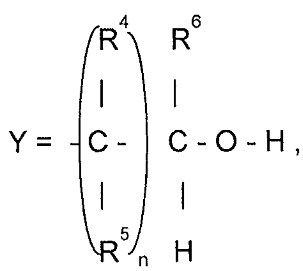

$R^1$, $R^2$, $R^3$, $R^4$, $R^5$ and $R^6$ may, independently of one another, be the same or different, H, ($C_6$-$C_{10}$) aryl or ($C_1$-$C_8$) (cyclo)alkyl radical and n=1-4.

Even more preferably the dialkanolamine is a di-β-alkanolamine, or di-β-hydroxyalkylamine, i.e. formula (II) with n=1. The advantage of the use of a branched polyesteramide prepared from di-β-hydroxyalkylamine in the method according to the invention is that it can form oxazolinium ions, which can bind anionic colorants via ionic bonds. Examples of suitable di-β-alkanolamines are diisobutanolamine (bis-2-hydroxy-1-butyl)amine), di-β-cyclohexanolamine and diisopropanolamine (bis-2-hydroxy-1-propyl)amine). Still more preferably the di-β-alkanolamine is a di(β-alkyl-substituted-β-hydroxyalkyl)amide. Most preferable, the di(β-alkyl-substituted-β-hydroxyalkyl)amide is diisopropanolamine or diisobutanolamine.

Examples of suitable alkanediolamines are 3-amino-1,2-propanediol, 2-amino-1,3-propanediol. Preferably, the alkanediolamine is a (di-β-hydroxy)-alkylamine. An example is 2-amino-1,3-propanediol.

The dialkanolamine may optionally be combined with a monoalkanolamine, a trialkanolamine or a mixture hereof. Preferably the monoalkanolamine is an alkanolamine according to formula III):

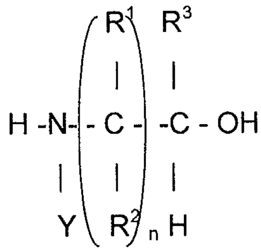

(III),

in which
Y = $(C_1-C_{20})$ (cyclo) alkyl and $R^1$, $R^2$ and $R^3$ may, independently of one another, be the same or different, H, $(C_6-C_{10})$ aryl or $(C_1-C_8)$(cyclo)alkyl radical and n=1-4.

More preferably, as the monoalkanolamine a mono-β-hydroxyalkylamide is used, i.e. monoalkanolamine according formula III with n=1. Examples of suitable mono-β-hydroxyalkylamides include ethanolamine, 1-(m)ethyl ethanolamine, n-butyl-ethanolamine, 1-(m)ethyl-isopropanolamine, isobutanolamine, β-cyclohexanolamine, n-butyl isopropanolamine and n-propanolamine. Most preferably the β-hydroxyalkylamide is a β-alkyl-substituted β-hydroxyalkylamide, such as isobutanolamine, β-cyclohexanolamine and n-butyl isopropanolamine.

A suitable trialkanolamine is, for example, tris(hydroxymethyl)-aminomethane.

Most preferably in method according to the invention, branched polyesteramides are used wherein the mono-, di- and tri-alkanol amines are β-alkyl-substituted β-hydroxyalkylamides. The advantage of the use of a branched polyesteramide based on β-alkyl-substituted β-hydroxyalkylamides in the method according to the invention is that this results in dyes with improved resistance to hydrolysis.

Suitable mono-functional carboxylic acids are, for example, saturated aliphatic $(C_1-C_{26})$ acids, unsaturated $(C_1-C_{20})$ fatty acids, aromatic acids and α,β-unsaturated acids. Examples of suitable α,β-unsaturated acids are (meth) acrylic acid, crotonic acid and monoesters or monoamides of itaconic acid, maleic acid, 12-hydroxystearic acid, polyether carboxylic acid, and fumaric acid. Suitable saturated aliphatic acids are for example acetic acid, propionic acid, butyric acid, 2-ethyl hexanoic acid, laurylic acid and stearic acid. Suitable aromatic acids are, for example, benzoic acid and tertiairy butyl benzoic acid.

A preferred structure of a branched polyesteramide is depicted in formula (1):

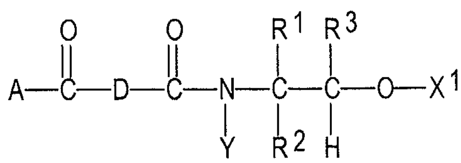

(1),

5

in which
Y = H, $(C_1-C_{20})$(cyclo)alkyl or $(C_6-C_{10})$aryl monoradical or

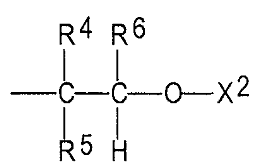

A= 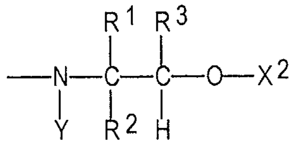 , 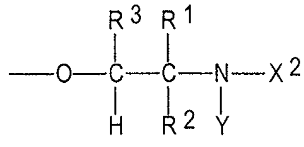 , 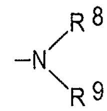 , or $-OR^7$

D = $(C_2-C_{24})$ (cyclo)alkyl, aryl or (cyclo)alkyl-aryl diradical, optionally substituted,

$X^1$ = 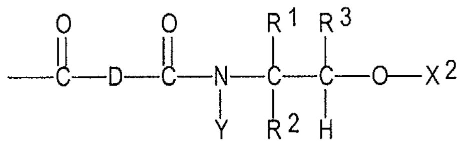 ,

wherein

$X^2$ = H, 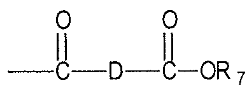 , 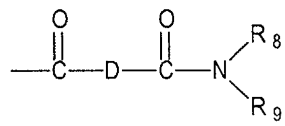 , 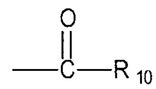 ,

or
$X^2$ is at least once $X^1$ and terminates with H,

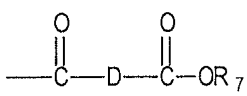 , 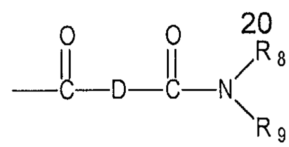 , or 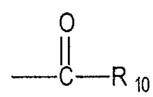

and
$R^1$, $R^2$, $R^3$, $R^4$, $R^5$ and $R^6$ may be H, $(C_6-C_{10})$ aryl or $(C_1-C_8)$(cyclo)alkyl radical, $OR^7$ is derived from a hydroxy-functional monomer, oligomer or polymer, wherein $R^7$ can be H, aryl, alkyl, cycloalkyl, or the radical of polyethyleneoxide, polypropylene-oxide, polytetrahydrofurane, or a nylon oligomer, $-NR^8R^9$ is derived from a amino-functional monomer wherein $R^8$ and $R^9$ may, independently of one another, be chosen from the group of optionally hetero-atom substituted $(C_6-C_{10})$ arylgroups, optionally hetero-atom substituted $(C_1-C_{28})$ alkylgroups, polyethers, polyesters and polyamides, and $C(O)R^{10}$ is derived from a monomeric, oligomeric or polymeric mono-functional carboxylic acid.

$R_{10}$ can be chosen from, for example, a saturated or unsaturated $(C_1-C_{40})$ alkyl or aromatic group, a polymer or an oligomer. Examples of suitable polymers are polyesters, polyethers and poly(capro)lactones. $R_{10}$ can be substituted with for example ester groups, ether groups, amide groups and alcohol groups.

The advantage of using a branched polyesteramide according to formula (1) in the method of the invention is that by proper choice of for example $R^1$-$R^{10}$ the solubility of the colorant according to the invention may be varied from soluble in highly polar solvents like water to soluble in apolar solvents e.g. toluene. For example, selection of longer chain hydrophobic groups, like longer chain aliphatic or aromatic groups, for $R^1$-$R^{10'}$ will favour the solubility in apolar solvents, whereas selection of hydrogen, where applicable, shorter chain aliphatic or aromatic groups and more hydrophilic groups like polyethyleneoxide, for $R^1$-$R^{10'}$ will favour the solubility in polar solvents. More particularly, this variation in solubility may be accomplished by variation of the groups $R^7$-$R^{10}$ alone. This has the advantage that dyes with variable solubility can be prepared with different branched polyesteramides based on a single carboxylic acid or hydroxy terminated polyesteramide.

A method for preparing a carboxy-functional branched polyesteramide is known from WO-A-00/5680. WO-A-00/5680 describes a method to produce the branched polyesteramide by reacting a dialkanolamine with a molar excess of a cyclic anhydride or dicarboxylic acid to form a carboxy-functional hydroxyalkylamide at a temperature between 20

°C and 100 °C, after which an acid terminated polyesteramide is obtained by polycondensation at a temperature between 120°C and 250°C. A modified branched polyesteramide is obtained by reacting the acid terminated polyesteramide with a monomer, oligomer or polymer containing reactive groups that can react with the carboxylic acid groups. Examples of suitable reactive groups are, for instance, primary and secondary amine groups and hydroxyl groups.

A method for preparing a hydroxy functional branched polyesteramide is disclosed in WO-A-99/16810. In the method according WO-A-99/16810 a cyclic anhydride is reacted with a molar excess of a dialkanolamine to form a hydroxyalkylamide at a temperature between 20°C and 100°C, after which a hydroxy terminated polyesteramide is obtained by polycondensation at a temperature between 120°C and 250 °C. A modified branched polyesteramide is obtained by reacting the hydroxy terminated polyesteramide with a monomer, oligomer or polymer containing reactive groups that can react with the hydroxyl groups. Examples of suitable reactive groups are, for instance, carboxylic acid groups, carboxylic acid esters, carboxylic anhydrides, epoxy groups, alkoxysilane groups and isocyanate groups. Preferably, the branched polyesteramide is modified with a compound containing a carboxylic acid group.

Another method for preparing the branched polyesteramides, is first contacting a hydroxyl- or amine-functional monomer, oligomer or polymer with a first molar excess of a cyclic carboxylic acid anhydride, forming a mixture of an acid functional ester, respectively an acid functional amide, and a cyclic acid anhydride, and then contacting the mixture with an amount of dialkanolamine, wherein the amount is a second molar excess with respect to the first molar excess.

The invention also relates to a dye comprising a colorant and a branched polyesteramide.

In the dye according to the invention the colorant can be a pigment or a dye. Suitable pigments are, for example, organic pigments. Organic pigments are described, for example, in Industrielle Organische Pigmente (W. Herbst, K. Hunger, Society of Dyers and Coulorists, VCH-Verlag, Weinheim 1995). Suitable dyes are, for example, the dyes listed in Sigma-Aldrich Handbook of Stains, Dyes and Indicators. Preferably, the colorant is a dye. This embodiment has the advantage that a dye with better solubility can be obtained.

In the dye according to the invention the colorant can be bonded to the branched polyesteramide. Bonding of the colorant to the branched polyesteramide may involve any type of bonding force. Bonding of dyes may be based on hydrogen bonding, Van der Waals forces, ionic bonds and/or covalent bonds, as discussed by F.J. Green in the Sigma-Aldrich Handbook, page vii-xii.

In a preferred embodiment of the invention, the colorant is bonded to the branched polyesteramide via hydrogen bonds. The branched polyesteramide comprises amide and ester functional groups, and optionally also hydroxyl, amine and/or carboxyl functional groups. These groups are capable of forming hydrogen bonds with functional groups on a dye. Hydrogen bonding will be stronger than Van der Waals forces and may favorably be applied for dyes to be dissolved in apolar solvents. A further advantage is that no chemical reaction is involved and that homogeneously mixing of the colorant with the branched polyesteramide suffices.

In another preferred embodiment, the colorant is bonded to the branched polyesteramide via an ionic bond or a covalent bond. More preferably, the colorant is bonded to the polyesteramide via an ionic bond. Ionic bond formation occurs as a result of the coulombic force between cations and anions when these ions come into close proximity of each other. In other words, colorants with cationic groups are attracted to anionic groups on the branched polyesteramide, while colorants with anionic groups are attracted to cationic groups on the branched polyesteramide. It can be applied to colorants with ionic groups; several of these colorants are only soluble in polar solvents, in particular water, and to a limited extent only. The advantage of ionically bonded colorant is that such a bond is very strong. Bonding of the colorant to the branched polyesteramide via an ionic bond can advantageously be applied to enhance the solubility both in water as well as in organic solvents.

Examples of suitable groups capable of forming anionic groups are, for example, carboxylic acid, sulfonic acid, phosphoric acid, phosphinic acid, or salts thereof.

Preferably, the anionic group is a carboxylic acid group when the anionic group is part of the branched polyesteramide. The advantage is that branched polyesteramides with carboxylic acid groups are easily prepared.

Preferably, the anionic group on the colorants is a sulfonic acid group or a carboxylic group, or salts thereof. The advantage is that stronger ionic bonds are formed. A further advantage is that many known dyes already contain a sulfonic acid group, or a salt thereof.

Examples of suitable groups capable of forming cationic groups are amine groups and salts thereof, and oxazolinium ions. Preferably, the amine group is a tertiary amine group when part of the branched polyesteramide. The advantage is that tertiary amine groups can be build in the branched polyesteramide, without the risk of reaction with carboxylic groups resulting in amide formation. Oxazolinium ions can also be used advantageously as the cations, since these ions can easily be formed in β-hydroxyalkyl-amide functional polyesteramides.

Examples of suitable colorants with the preferred ionic group can simply be selected from known dyes, e.g. from the list in The Sigma-Aldrich Handbook of Stains, Dyes and Indicators.

A further preferred embodiment of the invention relates to a dye wherein the colorant is chemically bonded to the branched polyesteramide via at least one covalent bond. Covalently bonded colorants form an integral part of the polyesteramide with which it is linked. Covalent bonding can be applied to colorants with reactive groups capable

to react with functional groups on the branched polyesteramide. The advantage of a covalently bonded colorant is that it forms an integral part of the branched polyesteramide to which it is linked and therefore there is less chance of detachement from the branched polyesteramide. Bonding of a colorant to the branched polyesteramide via a covalent bond can be advantageously applied to enhance the solubility both in water as well in organic solvents.

Examples of suitable reactive groups for forming covalent bonds are halotriazine rings, for example fluorotriazine rings or chlorotriazine rings, dihalo- or halosulfonyl-pyrimidine rings, dihaloquinoxaline groups, dihalopyrazone groups, dihalophthalazine groups, halobenzothiazole groups, mono-(m-carboxypyridinium)-triazine groups, amino epoxide groups, substituted sulfone groups, for example a vinylsulfone group or sulfatoethyl sulfone group, carboxylic acid groups or carboxylic acid chlorides, phenolic groups, haloacetylamide groups and sulfatopropionamides.

Preferably the reactive group is a fluorotriazine ring or chlorotriazine ring, a vinylsulfone group, a carboxylic acid group or carboxylic acid chloride, or a phenolic group. The advantage is that these groups easily react with a hydroxy group or a carboxylic acid group to give a covalent bond . A fluorotriazine ring or chlorotriazine ring can react, for example, with a hydroxy group to form an ether bond between the colorant and the branched polyesteramide. A vinylsulfone group can react with, for example, a hydroxy group to form an ether bond. A carboxylic acid group or carboxylic acid chloride can react with, for example a hydroxy group to form an ester bond. A phenolic group that can condensate with secondary amine groups or hydroxyl groups.

Dyes are generally applied on a substrate as a composition of the dye in a diluent. An advantage of compositions comprising a colorant bonded to a branched polyesteramide in a diluent is that the viscosity is low compared to compositions with known dyes based on for example polyethylene oxide bonded dyes, as described in the patents cited above. Therefore, the invention also relates to compositions of a dye according to the invention and a diluent. Suitable diluents are, for example, polar solvents like water, alcohols, glycols and ketones, and apolar solvents, such as toluene and hexane. Preferably, the diluent is a polar solvent, more preferably water. The advantage of water as the diluent is that the dye, when necessary to be removed after having been applied on a substrate, can be removed with water. Preferably the dye has a solubility of at least 20 mg/ml, more preferably at least 50 mg/ml in water. The advantage of a higher concentration is that inks can be prepared with a higher color strength.

In another preferred embodiment, the diluent is an organic solvent, for example toluene. This embodiment can advantageously be applied when a marking has to be made which is resistant to water, but should be removable with an organic solvent. Preferably the dyes have a solubility of at least 10 mg/ml, more preferably at least 20 mg/ml in toluene. The advantage of a higher concentration is that inks can be prepared with higher color strength.

The invention also relates to the use of a dye wherein a colorant is bonded to a branched polyesteramide as a fugitive dye, also known as temporary colorant.

Known fugitive dyes generally are based on combinations of a polyethylene oxide with a colorant, in which the polyethylene oxide is covalently bonded to the colorant. Fugitive dyes based on polyethylene oxide bonded colorants are described in, for example, the patents US-A-3,157,633 (Kuhn), US-A-4.981,516 (Kluger) and US-A-5,043,013 (Kluger). A disadvantage of many known fugitive dyes is that the dye, after being applied on a substrate, can only be removed partially, thereby leaving a stain.

As the fugitive dye according to the invention, preferably a dye is used, wherein the colorant is bonded to the branched polyesteramide via an ionic bond or a covalent bond. This has the advantage that the dye can be removed more completely after being applied on a substrate, leaving only a vague stain if any at all.

Fugitive dyes are often used to mark shaped parts, goods and articles, together mentioned objects, temporarily, e.g. for identification purposes. After the marking has fulfilled its function, it has to be removed. The advantage of object marked with a dye according to the invention, is that the marking can be removed, leaving only a vague stain if any at all. Therefore, the invention also relates to an object marked with a dye according to the invention.

The invention is elucidated with reference to the following Examples and Comparative Experiments.

## Methods

### Stain testing.

Staining tests have been done on dyes according to the invention described in Examples 1-21 and according to Comparative Experiments in order to check the washability of these dyes. Residual staining was tested in a wash test on Macherey-Nagel MN 615 filter paper. A stain is made out of 4 droplets of each of the dyes described below. The stain is left overnight after which the filter paper with the stain is placed under running tap water for 10 minutes. After the filter paper is dried a qualitative judgment of the remaining stain is made. The judgment is as follows:

0 = excellent washability
1 = very good washability
2 = good washability

3 = medium washability
4 = slight washability
5 = no washability

Test results are shown in Tables I-V and discussed further down below.

**Preparation of branched polyesteramides.**

**Polymer A.**

A double-walled glass reactor was charged with 528 g of molten diisopropanolamine [40°C]. 331 g of succinic anhydride was added and the reaction mixture was heated 180°C. After leaving the reaction mixture three hours at this temperature under stirring, the pressure in the reactor was lowered to 2 mPA. After a total reaction time of 6.5 hours, polymer A was cooled and obtained as a solid. The acid value was 0.8 mg KOH/g resin.
Polymer A is characterized by the following structural elements, referring to formula (1):

D=ethylene diradical, $R^1$, $R^2$, $R^4$,$R^5$ =H; $R^3$,$R^6$=methyl; $X^2$=H.

**Polymer B.**

A double-walled glass reactor was charged with 462.7 g of molten poly(ethyleneoxide) monomethylether [80°C] (Mn=750 g/mol). 209.0 g of molten hexahydrophthalic anhydride [80°C] was added and stirred for 30minutes at 80°C. Then 82.1 g molten diisopropanolamine [40°C] and 46.2 g 3,3'-iminobis(N,N-dimethylpropylamine) was added and the whole mixture was stirred at 180°C. After two hours at this temperature the pressure in the reactor was lowered to less than 10 mPA. After a total reaction time of 10.25 hours, polymer B was cooled and obtained as a solid. The acid value was 11.7 mg KOH/g resin.
Polymer B is characterized by the following structural elements, referring to formula (1):

D=diradical of cyclohexane; $R^1$, $R^2$, $R^4$,$R^5$ =H; $R^3$,$R^6$=methyl; $R^8$,$R^9$ =dimethylaminopropyl

$R^7$= radical of single end-capped poly(ethyleneoxide) with an Mn=750 g/mol.

**Polymer C**

A double-walled glass reactor was charged with 496.1 g of molten poly(ethyleneoxide) monomethylether [80°C] (Mn=550 g/mol). 218.3 g of molten hexahydrophthalic anhydride [80°C] was added and stirred for 30minutes at 80°C. Then 85.7 g molten diisopropanolamine [40°C] was added and the whole mixture is stirred at 180°C. After two hours at this temperature the pressure in the reactor was lowered to less than 10 mPA. After a total reaction time of 11.25 hours, the polymer was cooled and obtained as a waxy solid. The acid value was 18.1 mg KOH/g resin.
Polymer C is characterized by the following structural elements, referring to formula (1):

D=diradical of cyclohexane, R4,R5,R1,R2=H, R3,R6=methyl; R7= radical of single end-capped poly(ethyleneoxide) with an Mn=550 g/mol.

**Polymer D**

A double-walled glass reactor was charged with 501.4 g of molten poly(ethyleneoxide) monomethylether [80°C] (Mn=550 g/mol). 212.0 g of phthalic anhydride was added and stirred for 5 minutes at 80°C. Then 86.6 g molten diisopropanolamine [40°C] was added and the whole mixture was stirred at 155°C. After two hours at this temperature the pressure in the reactor was lowered to less than 10 mPA. After a total reaction time of 13.25 hours, the polymer was cooled and obtained as a waxy solid. The acid value was 12.8 mg KOH/g resin.
Polymer D is characterized by the following structural elements, referring to formula (1):

D=diradical of benzene, R4,R5,R1,R2=H, R3,R6=methyl, R7= radical of single end-capped poly(ethyleneoxide) with an Mn=550 g/mol.

**Polymer E**

A double-walled glass reactor was charged with 413.9 g of molten poly(ethyleneoxide) monomethylether [80°C] (Mn=550 g/mol). 314.6 g of dodecenylsuccinic anhydride was added and stirred for 5 minutes at 80°C. Then 71.5 g molten diisopropanolamine [40°C] was added and the whole mixture is stirred at 180°C. After two hours at this temperature the pressure in the reactor was lowered to less than 10 mPA. After a total reaction time of 11.50 hours, the polymer was cooled and obtained as a waxy solid. The acid value was 7.8 mg KOH/g resin.
Polymer E is characterized by the following structural elements, referring to formula (1):

D=diradical of 1-dodecenylethylene; R4,R5,R1,R2=H, R3,R6=methyl; R7= radical of single end-capped poly(ethyleneoxide) with an Mn=550 g/mol.

**Preparation of branched polyesteramide polymer F**

A double-walled glass reactor was charged with 313 g of molten diisopropanolamine [40°C]. 522 g of dodecenyl succinic anhydride was added and mixed. The reaction mixture was heated to 180°C. After two hours at this temperature the pressure in the reactor was lowered to less than 15 mPA. After a total reaction time of 4 hours and 15 minutes, the resulting reaction mixture was cooled and a polymer was obtained as a highly viscous material. The acid value was 0.8 mg KOH/g resin. Then 107.5 g of the viscous material was dissolved in 315 g toluene in a double-walled glass reactor. The solution was stirred and heated to 80°C while 1.46 g of triethylamine and 102.9 g of dodecenyl succinic anhydride were added. The solution is stirred for two more hours. Polymer F was obtained by evaporation of the solvent. The acid value was 85.4 mg KOH/g resin. The polymer was soluble in oil.

**<u>Preparation of solvent dyes with dyes bonded to a branched polyesteramides.</u>**

**Concept 1. Covalent bonding of reactive dyes with Polymer A**

<u>Example 1.</u>

3,0 g of Reactive Blue 4 (C.I. 61205) was mixed with 30 g of polymer A and heated to 150 °C for 2 hours. During the reaction a covalent bond was formed between the hydroxy group of polymer A and the chlorotriazine ring of the dye. Upon cooling the reaction mixture solidified. 10 g of the reaction mixture was dissolved in 15 g of water at 70 °C (Dye No. 1).

<u>Example 2.</u>

2,5 g of Reactive Red 24 (CAS No. 70210-20-7) was mixed with 25 g of polymer A and heated to 150 °C for 2 hours. During the reaction a covalent bond was formed between the hydroxy group of polymer A and the chlorotriazine ring of the dye. Upon cooling the reaction mixture solidified. 10 g of the reaction mixture was dissolved in 15 g of water at 70 °C (Dye No. 2).

<u>Example 3.</u>

6,6 g of Remazolschwarz B (Reactive Black 5, C.I. 20505) was mixed with 30 g of polymer A and heated to 150 °C for 2 hours. During the reaction a covalent bond was formed between the hydroxy group of polymer A and the deblocked vinylsulfone group of the reactive dye. Upon cooling the reaction mixture solidified. 10 g of the reaction mixture was dissolved in 15 g of water at 70 °C (Dye No. 3).

<u>Example 4.</u>

3 g of [2-(4-hydroxyphenylazo) benzoic acid] (HABA, CAS No. 1634-82-8) was mixed with 30 g of polymer A

and heated to 150 °C for 2,5 hours. An ester bond was formed between the polymer A and the dye during the reaction. Upon cooling the reaction mixture solidified. 10 g of the reaction mixture was dissolved in 15 g of water at 70 °C (Dye No. 4).
The staining test results with Dyes 1-4 have been collected in Table I below.

**Concept 2. Ionic bonding of dyes with polymer A.**

Example 5.

2,5 g of Sulphorhodamine B, (acid form, CAS No. 2609-88-3), was mixed with 25 g of polymer A and heated to 150 °C for 1,5 hours. Upon heating an ionic bond was formed between cyclic ammonium moieties of polymer A and the anionic moieties of he acid dye. Upon cooling the reaction mixture solidified. 10 g of the reaction mixture was dissolved in 15 g of water at 70 °C (Dye No. 5).

Example 6.

2,5 g of Sulphorhodamine B (Acid Red 52, C.I. 45100) was mixed with 25 g of polymer A and heated to 150 °C for 1 hour. Upon cooling the reaction mixture solidified. 10 g of the reaction mixture was dissolved in 15 g of water at 70 °C (Dye No. 6).

Example 7.

5 g of Acid Yellow 17 (C.I. 42650) was mixed with 30 g of polymer A and heated to 150 °C for 2 hours. Upon cooling the reaction mixture solidified. 10 g of the reaction mixture was dissolved in 15 g of water at 70 °C (Dye No. 7).

Example 8.

As example 7; instead of Acid Yellow 17, 3,1 g of Acid Blue 1 (C.I. 42045) was used. 10 g of the reaction mixture was dissolved in 15 g of water at 70 °C (Dye No. 8)

Example 9.

As example 7; instead of Acid Yellow 17, 6,0 g of Acid Blue 1 (C.I. 42045) was used. 10 g of the reaction mixture was dissolved in 15 g of water at 70 °C (Dye No. 9)

Example 10.

As example 7, instead of Acid Yellow 17, 12,0 g of Acid Blue 1 (C.I. 42045) was used. 10 g of the reaction mixture was dissolved in 15 g of water at 70 °C (Dye No. 10)

Example 11.

As example 7; instead of Acid Yellow 17, 3,0 g of Acid Green 5 (C.I. 42095) was used. 10 g of the reaction mixture was dissolved in 15 g of water at 70 °C (Dye No. 11)

Example 12.

As example 7; instead of Acid Yellow 17, 4,3 g of Acid Violet 19 (C.I. 42685) was used. 10 g of the reaction mixture was dissolved in 15 g of water at 70 °C (Dye No. 12)
The staining test results with Dyes 5-12 have been are collected in Table II below.

**Concept 3. Ionic bonding of dyes with polymer B.**

Example 13.

5,0 g of polymer B was dissolved in 5,0 g of water at room temperature. To this solution 255 mg of Sulphorhodamine B, (acid form, CAS No. 2609-88-3) was added and dissolved at room temperature. The solution was heated to 50 °C for 1 hour and then cooled to room temperature. (Dye No. 13)

Example 14.

5,0 g of polymer B was dissolved in 5,0 g of water at room temperature. To this solution 322 mg of Acid Red 52 (C.I. 45100) was added and dissolved at room temperature. The solution was heated to 50 °C for 1 hour and then cooled to room temperature. (Dye No. 14)

Example 15.

5,0 g of polymer B was dissolved in 5,0 g of water at room temperature. To this solution 500 mg of Acid Blue 1 (C.I. 42045) was added and dissolved at room temperature. The solution was heated to 50 °C for 1 hour and then cooled to room temperature. (Dye No. 15)

Example 16.

5,0 g of polymer B was dissolved in 5,0 g of water at room temperature. To this solution 295 mg of Acid Blue 74 (C.I. 73015) was added and dissolved at room temperature. The solution was heated to 50 °C for 1 hour and then cooled to room temperature. (Dye No. 16)

Example 17.

5,0 g of polymer B was dissolved in 5,0 g of water at room temperature. To this solution 416 mg of Acid Yellow 17 (C.I. 42650) was added and dissolved at room temperature. The solution was heated to 50 °C for 1 hour and then cooled to room temperature. (Dye No. 17)

Example 18.

5,0 g of polymer B was dissolved in 5,0 g of water at room temperature. To this solution 385 mg of Acid Green 5 (C.I. 42095) was added and dissolved at room temperature. The solution was heated to 50 °C for 1 hour and then cooled to room temperature. (Dye No. 18)
The staining test results with Dyes 13-18 have been are collected in Table III below.

**Concept 4. Hydrogen bonding of dyes with polymers C/D/E.**

Example 19.

5 g of Polymer C was dissolved in 20 g of tetrahydrofuran. To this solution 0.5 gram Solvent Black 3 was added. The mixture was stirred until all Solvent Black 3 was dissolved. The tetrahydrofuran solution comprised Solvent Black 3 in a concentration of 2 wt%. The solution was evaporated on a rotavapor until all tetrahydrofuran was removed. 1 gram of the residue was dissolved in 4 ml of water. (Dye No 19). The water solution comprised Solvent Black 3 in a concentration of 2 wt%

Example 20.

The procedure of example 19 was repeated, except that Polymer D was used instead of Polymer C. 1 gram of the residue was dissolved in 4 ml of water. (Dye No 20)

Example 21.

The procedure of example 19 was repeated, except that Polymer D was used instead of Polymer C. 1 gram of the residue was dissolved in 4 ml of water. (Dye No 21)
The staining test results with Dyes 19-21 have been collected in Table IV below.

**Concept 5. Bonding Interactions with "oil soluble" Polymer F.**

Example 22.

1,0 g of colorant Bismarck Brown Y (Basic Brown 1, C.I. 21000) was mixed with 20 g of polymer F and heated to 150°C for 4 hours. During mixing the colorant dissolved in polymer F and ionic bonds were formed between the

amine groups of the colorant and carboxylic acid groups of Polymer F. The mixture was cooled, upon which a paste like material was obtained. 10 g of the paste like material was dissolved in 20 g of toluene at 70°C. (Dye No. 22).

## Comparative Experiments

### Stain testing of pure dyes.

For reference purpose pure dyes have been tested in the same manner as the soluble dyes of examples 1-21. For this purpose, saturated solutions of the pure dyes in water were prepared by dissolving 100 mg of the corresponding dye in 1 ml of water. Residual staining was tested in a wash test on Macherey-Nagel MN 615 filter paper. A stain is made out of 4 droplets of each of the dye solutions prepared above. The stain is left overnight after which the filter paper with the stain is placed under running tap water for 10 minutes. After the filter paper is dried a qualitative judgment of the remaining stain is made.
The results of the tests have been integrated in Table I-III

### Stain testing of "state of the art" washable dyes.

State of the art washable dyes are available from Milliken Chemical under the trade name Palmer Colorants. Residual staining was tested in a wash test on Macherey-Nagel MN 615 filter paper.
A stain is made out of 4 droplets of each of the Palmer Colorants as received. The stain is left overnight after which the filter paper with the stain is placed under running tap water for 10 minutes. After the filter paper is dried a qualitative judgment of the remaining stain is made.
The results of the tests are summarized in Table V.

## Discussion of Results

The results of Examples 1-18 show that good solubility in water can be obtained for a wide range of dyes when the dyes are bonded to a branched polyesteramide. For instance in Example 10, the concentration of Acid Blue in water was 11,5 wt%, which was even not the maximum solubility, whereas the maximum solubility of the pure dye in water is only 3,0% (according to The Sigma-Aldrich Handbook of Stains, Dyes and indicators, page 553).
According to the same reference, page 405, Acid Blue 74 has a solubility of only 0.3% in water. The dye according to Example 16 comprises Acid Blue 74 in a concentration of 2.95% in water.
Solvent Black 3 is a dye with a very low solubility of water (0.01% according to The Sigma-Aldrich Handbook of Stains, Dyes and indicators, page 660). Results of Examples 19-21 show that soluble dyes based on Solvent Black 3 can be prepared with good solubility in water as well as in organic solvents, like tetrahydrofuran.
Basic Brown 1 is a colorant that is insoluble in toluene. The dye according to Example 22 comprises Basic Brown 1 in a concentration of 1.65% in toluene.
Comparison of the results of Tables I-III with the results of Table IV shows that soluble dyes, wherein the dye is ionically or covalently bonded to a branched polyesteramide give better results in the staining tests than soluble dyes wherein the dye is bonded via hydrogen bonds. The Tables I-III furthermore show that the soluble dyes wherein the dye is ionically or covalently bonded to a branched polyesteramide give better results in the staining tests than the pure dyes, and also better results than known fugitive dyes (results Table VI). More particular, these soluble dyes show a very good washability, since the stain they leave on the filter paper is less intense (ratings 1-2) or even absent at all (rating 0), whereas the pure dyes give intensive staining with ratings 2-4 and even the state of the art washable dyes give substantial staining in the Comparative Experiments with ratings of 2-3.

Table I:

| **Staining test results for covalently bonded dyes with Polymer A and pure dyes** | | | | |
|---|---|---|---|---|
| Dye | Example | Staining result | Comparative Experiment | Staining result |
| | | | | |
| Reactive Blue 4 | 1 | 1 | Pure dye | 4 |
| Reactive Red 24 | 2 | 1 | id. | 4 |
| Reactive Black 5 | 3 | 1 | id. | 4 |

Table I: (continued)

| Staining test results for covalently bonded dyes with Polymer A and pure dyes | | | | |
|---|---|---|---|---|
| Dye | Example | Staining result | Comparative Experiment | Staining result |
| HABA | 4 | 2 | * | |

* Not soluble in water

Table II:

| Staining test results for ionically bonded dyes with Polymer A and pure dyes | | | | |
|---|---|---|---|---|
| Dye | Example | Staining result | Comparative Experiment | Staining result |
| | | | | |
| Sulphorhodamine B | 5 | 1 | n.d. | |
| | 6 | 1 | | |
| Acid Yellow 17 | 7 | 0 | Pure dye | 2 |
| Acid Blue 1 | 8 | 0 | id. | 2 |
| | 9 | 0 | | |
| | 10 | 0 | | |
| Acid Green 5 | 11 | 1 | id. | 4 |
| Dye | Example | Staining result | Comparative Experiment | Staining result |
| Acid Violet 19 | 12 | 1 | id. | 3 |
| n.d.= not determined | | | | |

Table III:

| Staining test results for ionically bonded dyes with Polymer B and pure dyes | | | | |
|---|---|---|---|---|
| Dye | Example | Staining result | Comparative Experiment | Staining result |
| | | | | |
| Sulphorhodamine B | 13 | 1 | n.d. | |
| Acid Red 52 | 14 | 1 | Pure dye | 2 |
| Acid Blue 1 | 15 | 0 | id. | 2 |
| Acid Blue 74 | 16 | 1 | id. | 4 |
| Acid Yellow 17 | 17 | 0 | id. | 2 |
| Acid Green 5 | 18 | 1 | id. | 4 |
| n.d.= not determined | | | | |

Table IV:

| Staining test results for hydrogen bonded Solvent Black 3 with Polymer C, D and E | | |
|---|---|---|
| Polymer | Example | Staining result |
| | | |
| Polymer C | 19 | 4 |
| Polymer D | 20 | 4 |

Table IV: (continued)

| Staining test results for hydrogen bonded Solvent Black 3 with Polymer C, D and E | | |
|---|---|---|
| Polymer | Example | Staining result |
| Polymer E | 21 | 4 |

Table V.

| Staining test results with 'state of the art' washable dyes. | |
|---|---|
| Palmer Colorant | Result |
| Blue | 3 |
| Magenta | 3 |
| Scarlet | 2 |
| Red | 2 |
| Black | 2 |

## Claims

1. Method for enhancing the solubility of a colorant, **characterized in that** a colorant is contacted with a branched polyesteramide.

2. Method according claim 1, wherein the branched polyesteramide is based on β-hydroxyalkylamide.

3. Method according to claim 1 or 2, wherein the branched polyesteramide has a structure according to formula (1)

10

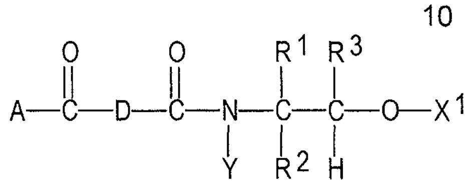 (1),

in which
Y = H, $(C_1\text{-}C_{20})$(cyclo)alkyl or $(C_6\text{-}C_{10})$aryl monoradical or

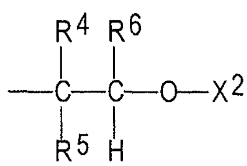

A= 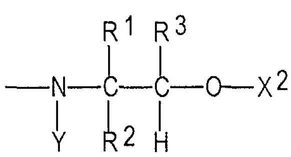 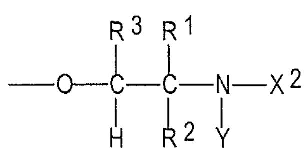 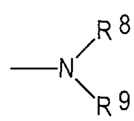 ,

or $-OR^7$

D = ($C_2$-$C_{24}$) (cyclo)alkyl, aryl or (cyclo)alkyl-aryl diradical, optionally substituted,

$X^1$ = 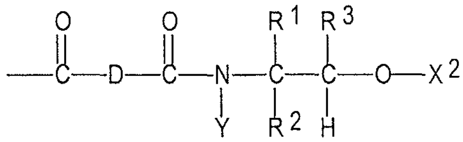 ,

wherein

$X^2$ = H, 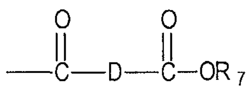 , 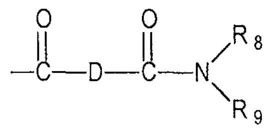 , 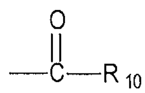 ,

or

$X^2$ is at least once $X^1$ and terminates with H,

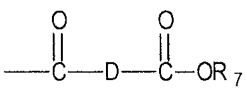 , 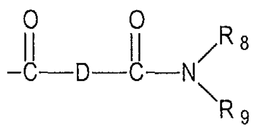 , or 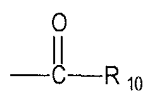

and

$R^1$, $R^2$, $R^3$, $R^4$, $R^5$ and $R^6$ may be H, ($C_6$-$C_{10}$) aryl or ($C_1$-$C_8$)(cyclo)alkyl radical, $OR^7$ is derived from a hydroxy-functional monomer, oligomer or polymer, wherein $R^7$ can be H, aryl, alkyl, cycloalkyl, or the radical of polyethyleneoxide, polypropylene-oxide, poly tetrahydrofuran, or a nylon oligomer, $-NR^8R^9$ is derived from a amino-functional monomer wherein $R^8$ and $R^9$ may, independently of one another, be chosen from the group of optionally hetero-atom substituted ($C_6$-$C_{10}$) arylgroups, optionally heteroatom substituted ($C_1$-$C_{28}$) alkylgroups, polyethers, polyesters and polyamides, and $C(O)R^{10}$ is derived from a monomeric, oligomeric or polymeric mono-functional carboxylic acid.

**4.** Dye, comprising a colorant and a branched polyesteramide.

**5.** Dye according to claim 4, wherein the colorant is a dye.

**6.** Dye according to any of claims 4 and 5, wherein the colorant is bonded to the polyesteramide via ionic bonds.

**7.** Dye according to any of claims 4 and 5, wherein the colorant is bonded to the polyesteramide via covalent bonds.

**8.** Dye according to any of claims 4-7, wherein the dye has a solubility of at least 20 mg/ml in water.

**9.** Dye according to any of claims 4-7, wherein the dye has a solubility of at least 10 mg/ml in toluene.

**10.** Composition comprising a dye according to any of claims 4-9 and a diluent.

**11.** Composition according to claim 10, wherein the diluent is water.

**12.** Use of a dye according to any of claims 4-9 as a fugitive dye.

**13.** Object marked with a dye according to any of claims 4-9.

European Patent Office

# EUROPEAN SEARCH REPORT

Application Number
EP 01 20 4999

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 81 02395 A (SADOLIN & HOLMBLAD AS ;GULEV N (DK); CANESTRI G (DK)) 3 September 1981 (1981-09-03) * examples 4-10 * | 1,4 | C09B67/00 C08G69/44 |
| X | EP 0 189 385 A (BERGVIK KEMI AB) 30 July 1986 (1986-07-30) * examples 30-68 * | 1,4 | |
| Y | US 3 157 633 A (KUHN HANS H) 17 November 1964 (1964-11-17) * column 1, line 66 - column 2, line 2 * | 1-13 | |
| Y | US 5 043 013 A (KLUGER EDWARD W ET AL) 27 August 1991 (1991-08-27) * abstract * | 1-13 | |
| Y | US 4 981 516 A (KLUGER EDWARD W ET AL) 1 January 1991 (1991-01-01) * abstract * | 1-13 | TECHNICAL FIELDS SEARCHED (Int.Cl.7) |
| Y | VAN BENTHEM ET AL.: "New commercially available hyperbranched polymers - for taylor-made solutions" POLYM. MATER. SCI. ENG., vol. 80, January 1999 (1999-01), pages 72-73, XP001057406 cf. p. 72, left column, two last lines of paragraph "introduction" cf. p. 73, right column, lines 3-8 | 1-13 | C09B C08G |

The present search report has been drawn up for all claims

| Place of search | Date of completion of the search | Examiner |
|---|---|---|
| MUNICH | 1 March 2002 | Fritz, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 20 4999

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2002

| Patent document cited in search report | | Publication date | Patent family member(s) | | Publication date |
|---|---|---|---|---|---|
| WO 8102395 | A | 03-09-1981 | DK | 85780 A | 29-08-1981 |
| | | | WO | 8102395 A1 | 03-09-1981 |
| | | | EP | 0047283 A1 | 17-03-1982 |
| | | | FI | 813373 A ,B, | 28-10-1981 |
| | | | NO | 813498 A | 16-10-1981 |
| | | | NO | 155182 B | 17-11-1986 |
| EP 0189385 | A | 30-07-1986 | DE | 3678973 D1 | 06-06-1991 |
| | | | EP | 0189385 A2 | 30-07-1986 |
| | | | JP | 1033502 B | 13-07-1989 |
| | | | JP | 1550585 C | 23-03-1990 |
| | | | JP | 61163959 A | 24-07-1986 |
| | | | US | 4999132 A | 12-03-1991 |
| | | | US | 5153069 A | 06-10-1992 |
| US 3157633 | A | 17-11-1964 | CH | 372275 A | 29-06-1963 |
| | | | DE | 1419801 A1 | 21-11-1968 |
| | | | GB | 996068 A | 23-06-1965 |
| US 5043013 | A | 27-08-1991 | NONE | | |
| US 4981516 | A | 01-01-1991 | NONE | | |

EPO FORM P0459

For more details about this annex : see Official Journal of the European Patent Office, No. 12/82